# DEMANDE DE BREVET EUROPEEN

(11) **EP 0 616 787 A1**
(43) Date de publication de la demande: **28.09.1994**
(21) Numéro de dépôt: 94400617.0
(22) Date de dépôt: 23.03.1994
(51) Int. Cl.: A47J 47/00

(54) **Ustensile de cuisine à usage de planche à découper**

(30) Priorité: 24.03.1993 FR 9303637
(71) Demandeur: Pellegrino, Roger, F-06130 Grasse (FR)
(72) Inventeur: Pellegrino, Roger, F-06130 Grasse (FR)
(74) Mandataire: Hautier, Jean-Louis

(57) **Abrégé**

La présente invention a trait à un ustensile de cuisine, qui fait office de planche à découper et de récipient pour les aliments qui ont été découpés.

La planche à découper (2) et le récipient pour aliments (3) sont solidarisés l'un à l'autre, de façon réversible, grâce à des moyens de fixation, et la planche à découper (2) est positionnée au centre du récipient pour aliments (3), lui même formé par une bourse (5) en un matériau suffisamment souple faisant office de sac de conditionnement des aliments coupés en position fermée, et de plan de travail en position ouverte.

Application à la découpe du pain et des viandes.

## Description

La présente invention a trait à un ustensile de cuisine, qui fait office de planche à découper et de récipient pour les aliments qui ont été découpés.

La fonction de découpe et la fonction de stockage des aliments découpés sont dissociables, puisque la planche à découper peut être détachée du récipient pour aliments.

De nombreux documents concernent des ustensiles de cuisine, tels que des planches à découper.

*Le document FR-A-2.305.281 concerne un dispositif permettant* *de couper du pain, et d'en récupérer les miettes dans ce même* *dispositif. Il comprend une grille, fixée sur un coffre qui* *recueille les miettes. L'invention peut être utilisée pour le* *découpage du pain ou tout autre produit.*

*Le document FR-A-2.501.990 concerne une planche à découper* *qui est constituée d'une cuvette et d'une grille amovible logée* *dans la cuvette et présentant sur le dessus une zone pleine. La* *grille est constituée de lamelles longitudinales rapprochées et* *de lames transversales espacées les unes des autres. Les lames* *prennent appui sur le fond de la cuvette.*

La fonction de découpe est assurée dans ces deux documents, mais le stockage des aliments n'est pas possible.

Seuls les détritus ou les miettes issus de la découpe sont stockés.

*Le document FR-A-2.343.461 concerne une planche à découper* *qui présente une ou des rainures ou rigoles convenablement formées* *sur la face de travail. Elle comporte une cuvette ou saucière* *adaptée d'une manière amovible dans un évidement de la planche,* *à l'emplacement où aboutissent la ou les rainures ou rigoles.*

*Le document FR-A-2.460.125 concerne une planche à découper* *sous forme d'un plateau en bois rectangulaire qui est pourvu d'un* *récipient amovible pour récupérer les liquides, sauces, etc. sans* *avoir besoin d'oter la viande qui se trouve dessus et sans avoir* *besoin de lever la planche.*

Ces deux brevets ne permettent le stockage que de substances liquides qui vont pouvoir s'écouler, comme par exemple, le jus ou le sang d'une viande.

D'autres documents représentatifs de l'état de la technique, tels que DE-A-35 16 846, US-A-1.540.507, US-A-1.833.486 ou DE-U-88 07 704, permettent, à l'instar de la présente invention, à la fois de découper et de stocker des aliments.

Pourtant, les dispositifs revendiqués par ces documents sont lourds, encombrants et fragiles, puisque le récipient est rigide, alors que ladite invention présente un récipient souple qui s'adapte en volume aux aliments contenus.

La présente invention propose un ustensile de cuisine à usage de planche à découper et de récipient pour aliments, caractérisé par le fait que la planche à découper et le récipient pour aliments sont solidaires l'un de l'autre, de façon réversible, grâce à des moyens de fixation, et que la planche à découper est positionnée au centre du récipient pour aliments, lui-même formé par une bourse en un matériau suffisamment souple faisant office de sac de conditionnement des aliments coupés en position fermée, et de plan de travail en position ouverte.

Selon un mode de réalisation, le pourtour de ladite bourse est pourvu d'un ourlet pour faire passer un lacet destiné à maintenir la bourse en position fermée.

Selon un autre mode de réalisation, le pourtour de la bourse est pourvu de passants dans lesquels passe un lacet destiné à maintenir ladite bourse en position fermée.

Le matériau de la bourse est un matériau en feuille tissé ou non tissé.

Les moyens de fixation de la planche à découper sur le récipient pour aliments sont formés par des bandes textiles adhésives.

Les dessins ci-joints sont donnés à titre d'exemples indicatifs et non limitatifs. Ils représentent deux modes de réalisation préférés selon l'invention. Ils permettront de comprendre aisément l'invention.

La figure 1 représente une vue en perspective d'un mode de réalisation de l'invention en position ouverte.

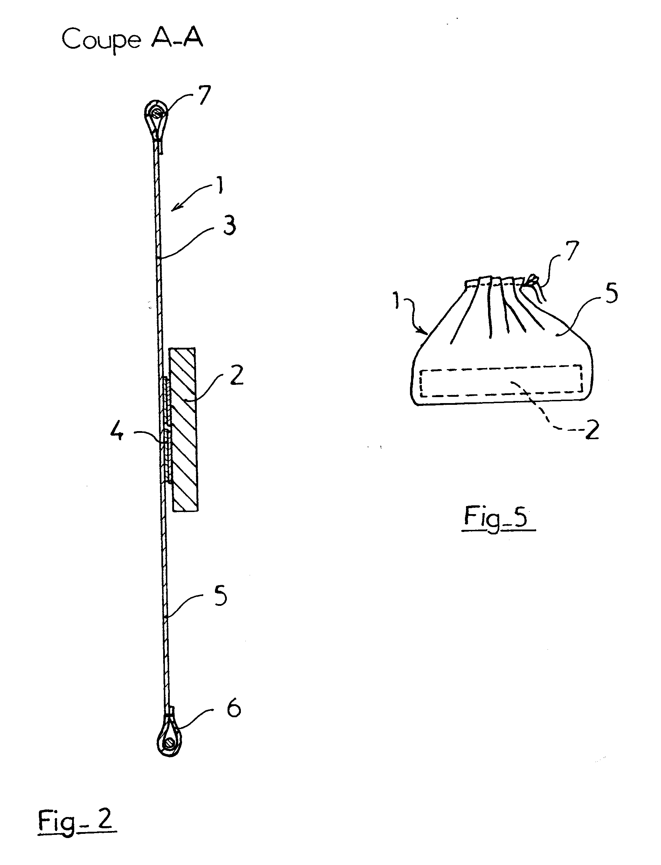

La figure 2 représente une coupe transversale selon A-A de la figure 1.

Les figures 3 et 4 représentent une vue en perspective du mode de réalisation de la figure 1, quand la planche à découper (figure 3) et le récipient pour aliments (figure 4) sont détachés l'un de l'autre.

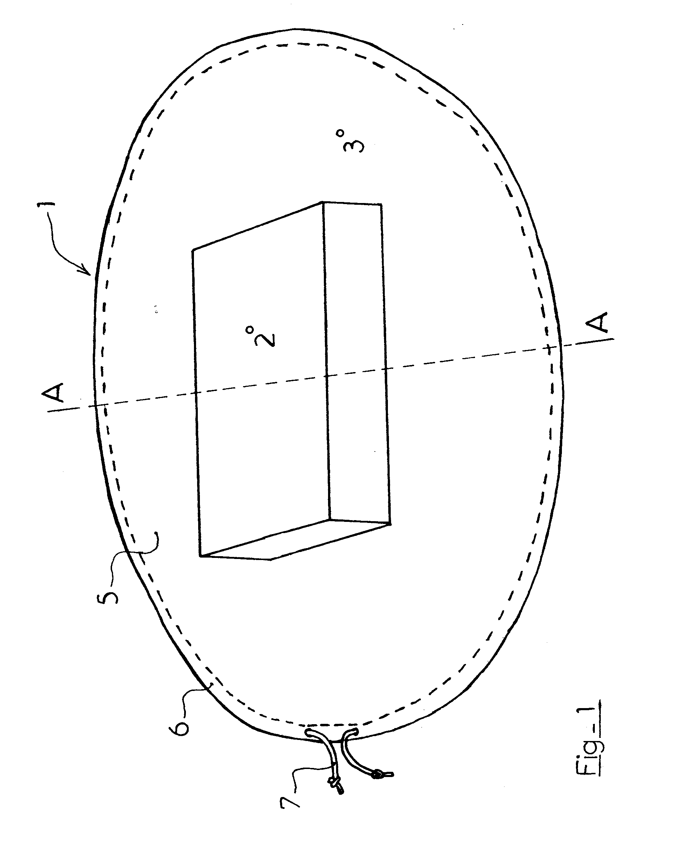

Enfin, la figure 5 représente le mode de réalisation de la figure 1 en position fermée.

La présente invention concerne un ustensile de cuisine 1 faisant office de planche à découper 2.

Cette planche à découper 2 a pour caractéristique d'être contenue à l'intérieur d'un récipient pour aliments 3.

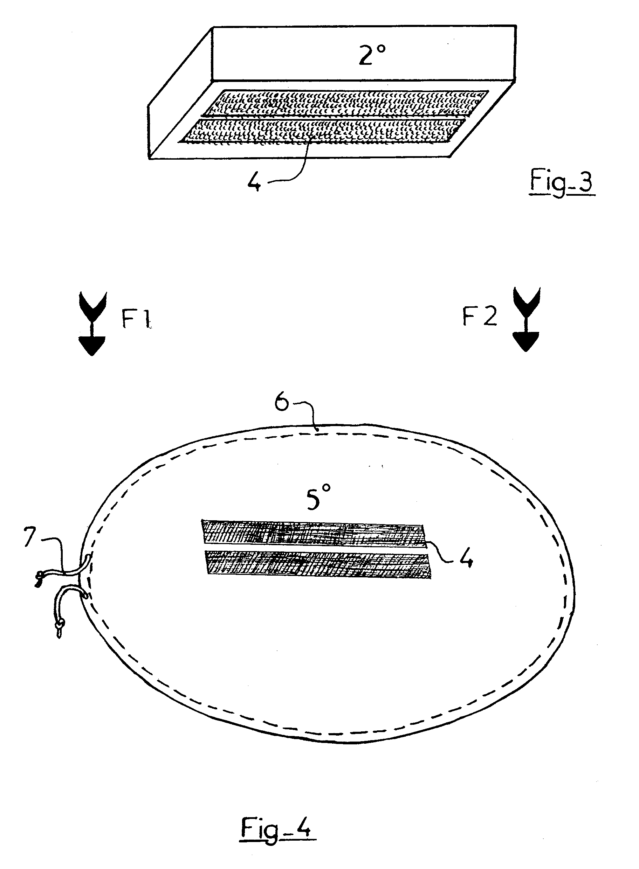

La planche 2 et le récipient 3 sont fixés l'un à l'autre grâce à des moyens de fixation 4 visibles aux figures 3 et 4.

Les moyens de fixation 4 ont la particularité de rendre la planche à découper 2 solidaire de façon réversible par rapport au récipient pour aliments 3.

Selon un mode de réalisation, le récipient pour aliments 3 est formé par une bourse 5, fabriquée en un matériau suffisamment souple, de sorte que la bourse 5 fasse office de sac de conditionnement des aliments coupés en position fermée tel que cela est représenté à la figure 5, et qu'elle fasse office de plan de travail en position ouverte tel que cela est représenté à la figure 1.

Sur cette figure 1, il y a possibilité de découper par exemple du pain sur la planche 2 sans que les miettes, qui ont tendance à se disperser, ne sortent du récipient pour aliments 3, ledit récipient pour aliments 3 est ici constitué par la bourse 5.

La forme de la bourse 5 est sensiblement ovoïdale.

Sur tout le pourtour de la bourse 5, est présent un ourlet 6 dans lequel est implanté un lacet 7.

Ce lacet 7 permettra de maintenir les bords, formant le pourtour de la bourse 5, proches les uns des autres en position fermée, lorsque le lacet sera noué tel que cela est représenté à la figure 5.

Bien entendu, en lieu et place de l'ourlet 6, il serait possible d'avoir des passants.

La bourse 5 est construite en un matériau du type en feuille qu'il soit tissé ou non tissé.

Lorsque la structure de la bourse 5 est non tissée, la bourse 5 peut être constituée par un papier jetable.

Les moyens de fixation 4 sont constitués, sur les figures, par des bandes textiles adhésives.

Lorsque l'on rapproche la planche à découper 2 et le récipient pour aliments 3, selon les flèches F1 et F2 de la figure 4, les bandes textiles adhésives se superposent et rendent solidaires la planche 2 et le récipient 3.

Néanmoins, les moyens de fixation 4 pourraient être constitués par tout moyen de fixation du domaine public, par exemple, des attaches, des agrafes ou autres.

### REFERENCES

1. Ustensile de cuisine
2. Planche à découper
3. Récipient pour aliments
4. Moyens de fixation
5. Bourse faisant office de sac de conditionnement et de plan de travail
6. Ourlet
7. Lacet
F1, F2. Positionnement de la planche à découper sur le récipient pour aliment

## Revendications

1. Ustensile de cuisine (1) à usage de planche à découper (2) et de récipient pour aliments (3), caractérisé par le fait
que la planche à découper (2) et le récipient pour aliments (3) sont solidaires l'un de l'autre, de façon réversible, grâce à des moyens de fixation (4), et
que la planche à découper (2) est positionnée au centre du récipient pour aliments (3), lui-même formé par une bourse (5) en un matériau suffisamment souple faisant office de sac de conditionnement des aliments coupés en position fermée, et de plan de travail en position ouverte.

2. Ustensile selon la revendication 1, caractérisé par le fait
que le pourtour de ladite bourse (5) est pourvu d'un ourlet (6) pour faire passer un lacet (7) destiné à maintenir la bourse (5) en position fermée.

3. Ustensile selon la revendication 1, caractérisé par le fait
que le pourtour de la bourse (5) est pourvu de passants dans lesquels passe un lacet (7) destiné à maintenir ladite bourse (5) en position fermée.

4. Ustensile selon l'une quelconque des revendications 1 ou 2, caractérisé par le fait
que le matériau de la bourse (5) est un matériau en feuille tissé ou non tissé.

5. Ustensile selon la revendication 1, caractérisé par le fait
que les moyens de fixation (4) de la planche à découper (2) sur le récipient pour aliments (3) sont formés par des bandes textiles adhésives.
